# EUROPÄISCHE PATENTSCHRIFT

(11) **EP 0 699 357 B1**
(45) Veröffentlichungstag und Bekanntmachung des Hinweises auf die Patenterteilung: **08.01.1997**
(21) Anmeldenummer: 94915141.9
(22) Anmeldetag: 28.04.1994
(51) Int. Cl.: H02K 19/10, H02K 19/06, H02K 1/24

(54) **RELUKTANZMOTOR, INSBESONDERE ZUM ANTRIEB EINES WASCHAUTOMATEN**
RELUCTANCE MOTOR, IN PARTICULAR FOR DRIVING A WASHING MACHINE
MOTEUR A RELUCTANCE, NOTAMMENT POUR ENTRAINER UNE MACHINE A LAVER

(30) Priorität: 19.05.1993 EP 93108166
(43) Veröffentlichungstag der Anmeldung: 06.03.1996
(73) Patentinhaber: SIEMENS AKTIENGESELLSCHAFT, 80333 München (DE)
(72) Erfinder: KLEIN, Hans-Wilhelm, D-97078 Würzburg (DE); DÖBLINGER, Rüdiger, D-97348 Rödelsee (DE); STEINSHORN, Axel, D-97957 Wittighausen (DE); TIEMEYER, Peter, D-97074 Würzburg (DE)
(86) Internationale Anmeldenummer: EP9401350
(87) Internationale Veröffentlichungsnummer: WO9427354

(56) Entgegenhaltungen:
- EP-A- 0 426 376
- DE-A- 3 049 582
- DE-A- 3 905 997
- DE-B- 1 026 848
- DE-B- 2 017 197
- GB-A- 1 307 831
- US-A- 2 483 848
- US-A- 5 053 666

## Beschreibung

Die Erfindung bezieht sich auf einen Reluktanzmotor, insbesondere zum Antrieb eines Waschautomaten, gemäß Oberbegriff des Anspruchs 1; ein derartiger Reluktanzmotor ist z.B. durch den Aufsatz "Geschalteter Reluktanzmotor als robuste Alternative" aus der Zeitschrift ELEKTRONIK 26/1992, Seiten 72-75 bekannt.

Der vorgenannte bekannte, z.B. auch zum Einsatz als Schleudermotor für eine Waschmaschine vorgesehene, Reluktanzmotor besteht üblicherweises aus einem lamellierten Statorpaket mit über den Umfang verteilten Statorpolen mit zugeordneten Erregerspulen und einem unbewickelten Rotorpaket mit über den Umfang verteilten Rotorpolen und dazwischen verbleibenden Aussparungen, derart daß Zonen erhöhter bzw. verminderter Reluktanz zwischen dem Rotor einerseits und dem Stator andererseits entstehen. Betrachtet man den Verlauf des magnetischen Flußes zwischen Stator und Rotor als Funktion des Stromes und der Rotorlage, so kann man zwischen Bereichen keiner Überlappung der Pole von Rotor bzw. Stator, zunehmender Überlappung der Pole, ganzer Überlappung der Pole und abnehmender Überlappung der Pole unterscheiden. Durch Weiterschaltung der Wicklungsbestromung der Erregerwicklungen der Statorpole und gegebenenfalls durch Taktung mit Pulsbreitenmodulation kann eine Drehzahlsteuerung und ein Drehmomentenverhalten erreicht werden, das trotz wesentlich einfacherer Ausführung des Motors mit anderen drehzahlveränderbaren Antrieben, wie z.B. Kommutatormotoren bzw. stromrichtergespeisten Induktionsmotoren, vergleichbar ist.

Durch die DE-A1-39 05 997 ist ein Reluktanzmotor mit einem unbewickelte Einzelpole aufweisenden Rotor bekannt, wobei zur Vermeidung von Luftverwirbelungen Einzelabdeckungen mit sich beidseitig in Umfangsrichtung erstreckenden Ansätzen auf die rotorseitigen Einzelpole aufgesteckt und die Zwischenräume zwischen den einander jeweils benachbarten Enden der Ansätze duch Abdeckelemente überbrückt sind; die Einzelabdeckungen und die Abdeckelemente bestehen dabei offenbar, ähnlich wie für die statorseitigen Spulenkörper vorgesehen, aus Kunststoff.

Aufgabe vorliegender Erfindung ist es, gegenüber bekannten vergleichbaren Kommutatormotoren bzw. umrichtergeregelten Induktionsmotoren bei geringerem Motorgewicht und Fertigungsaufwand auch bei hoher Drehzahlspreizung, insbesondere bei für Waschautomaten-Antriebe vorteilhaft hoher Schleuderdrehzahl, die Betriebsgeräusche niedrig halten zu können.

Die Lösung dieser Aufgabe gelingt bei einem Motor der eingangs genannten Art durch die Lehre des Anspruchs 1; vorteilhafte Ausgestaltungen der Erfindung sind jeweils Gegenstand der Unteransprüche.

Durch die erfindungsgemaß vorgesehenen Aus füllungen werden einerseits, insbesondere bei höheren Rotationsgeschwindigkeiten, ansonsten auftretende Geräusche durch Wirbelbildung im umgebenden Medium zwischen den Statorpolen einerseits und den Rotorpolen andererseits als auch eine Gerauschbildung durch Magnetostriktion bzw. Momentenpulsation beim ansonsten plötzlichen Eintreten der Rotorpole in die Bereiche des statorpolseitigen Flusses vermieden. Selbstverständlich ist bei der Dimensionierung der "magnetisch weichen" Übergänge zwischen den benachbarten Rotorpolen darauf zu achten, daß ein magnetischer Kurzschluß und damit eine wesentliche Minderung des leistungsbestimmenden Drehmomentes vermieden wird; dazu können entsprechende Dimensionierungen der Aus füllungen, jedoch auch gezielte magnetische Engpasse in den die benachbarte Rotorpole verbindenden Aus füllungen vorgesehen sein.

Nach einer ersten Ausgestaltung der Erfindung sind Kunststoff-Ausfüllungen mit einer Beimischung aus magnetischleitendem Material vorgesehen, wobei diese Aus füllungen entweder als Blöcke zwischen die Rotorpole eingesetzt oder bei fertig paktetierten Rotorblechpaketen auch eingespritzt sein können.

In fertigungstechnisch besonders einfacher Weise ist nach einer weiteren Ausgestaltung der Erfindung vorgesehen, als Aus füllungen randseitig an die Lamellen des Rotorpaketes mitangestanzte Lamellenstege vorzusehen, die einstückig in die Polspitzen der Rotorpole übergehen und durch ihre Dimensionierung bzw. durch eingestanzte Lücken magnetische Engpässe derart bilden, daß ein drehmomentmindernder magnetischer Kurzschluß zwischen den benachbarten, verschiedener Polarität zugehörigen Rotorpolen vermieden wird.

Die Erfindung sowie weitere vorteilhafte Ausgestaltungen der Erfindung werden im folgenden anhand schematisch dargestellter Ausführungsbeispiele in der Zeichnung naher erläutert; darin zeigen
- FIG 1: in einem radialen Querschnitt den schematischen Aufbau eines üblichen Reluktanzmotors mit zwischen den Rotorpolen betriebsbedingten Lücken,
- FIG 2: eine erste Ausführung eines erfindungsgemäßen Rotors eines Reluktanzmotors,
- FIG 3: eine zweite Ausführung eines erfindungsgemäßen Rotors für einen Reluktanzmotor,
- FIG 4: eine dritte Ausführung eines erfindungsgemäßen Rotors für eine Reluktanzmotor.

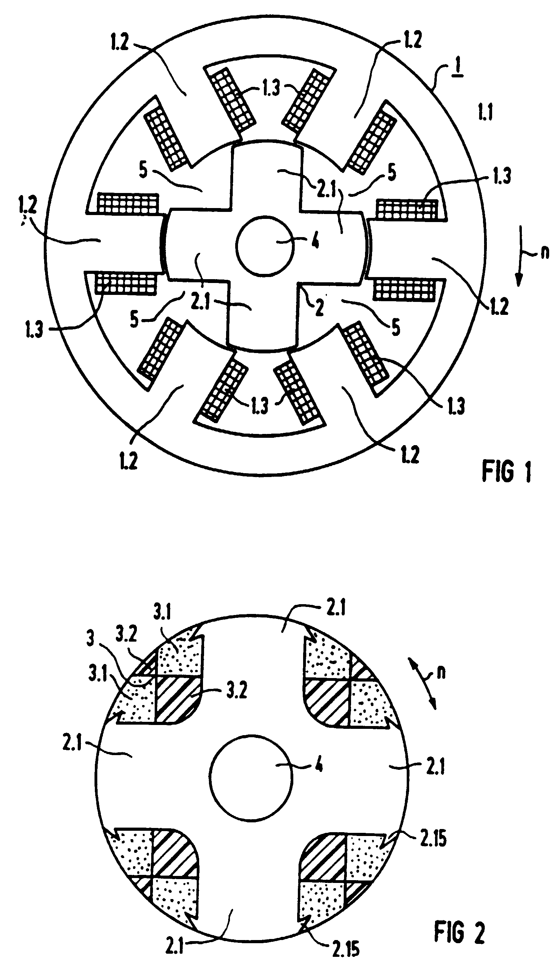

FIG 1 zeigt in radialem Querschnitt einen Reluktanzmotor mit einem lamellierten Statorblechpaket 1 und einem von einer Rotorwelle 4 gehaltenen lamellierten Rotorblechpaket 2. Die dargestellte Stator-Ausführung betrifft einen dreistrangigen Motor mit einem Statorjoch 1.1 und mit pro Strang jeweils zwei einander diametral gegenüberliegenden Statorpolen 1.2 mit jeweils einer zugeordneten Erregerwicklung 1.3.

Das dargestellte Rotorblechpaket 2 betrifft eine Ausführung mit vier ausgeprägten Rotorpolen 2.1 und dazwischenliegenden Aussparungen 5. Bei der dargestellten Zuordnung der Statorpole 1.2 einerseits zu den Rotorpolen 2.1 andererseits befinden sich die waagrechten Rotorpole 2.1 in Bereichen ganzer Überlappung und die senkrechten Rotorpole mit ihrer einen Polspitze - je nach Drehrichtung n - in einem Bereich zunehmender Überlappung und mit ihrer anderen Polspitze in einem Bereich abnehmender Überlappung.

In der Fachliteratur wird insbesondere für den Fall das Reluktanzmotore als Schrittmotor eingesetzt bzw. angesteuert werden für einen stator- bzw. rotorseitigen Pol auch die Bezeichnung "Statorzahn" bzw. "Rotorzahn" gewählt.

Die Speisung der Erregerwicklungen 1.3 erfolgt in hier nicht näher erläuterter Weise über eine elektronische Steuereinrichtung mit umlaufender Wicklungsbestromung und gegebenenfalls einer Taktung mit Pulsbreitenmodulation zur Vorgabe der Motorspannung mit Überwachung des Motorstromes.

FIG 2 bis 4 zeigen drei verschiedene Ausgestaltungen der erfindungsgemaß vorgesehenen Maßnahmen zur Geräuschminderung.

Gemäß FIG 2 sind in die Ausparungen 5 zwischen den Rotorpolen 2.1 Kunststoff-Ausfüllungen 3 eingespritzt bzw. eingesetzt, die aus Blöcken 3.1 ferromagnetischer Leitfähigkeit und aus Blöcken 3.2 ohne ferromagnetische Leitfähigkeit bestehen, derart daß mittig zwischen zwei benachbarten Rotorpolen 2.1 ein magnetischer Engpaß besteht, jedoch in den unmittelbaren tangentialen Nachbarbereichen der Polspitzen der Rotorpole 2.1 eine im Sinne einer Verminderung von durch Magnetostriktion bedingten Geräuschen vorteilhafte Verschleifung der Polspitzen entsteht.

Zur festigkeitserhöhenden formschlüssigen Verklammerung der Ausfüllungen mit den Rotorpolen 2.1 sind diese mit Krallen 2.15 versehen.

In fertigungstechnisch vorteilhafter Weise sind die Ausfüllungen bei der Ausgestaltung gemäß FIG 2 durch Kunststoffblöcke 3.1 gebildet, denen vorzugsweise kornförmiges ferromagnetisches Material beigemischt ist.

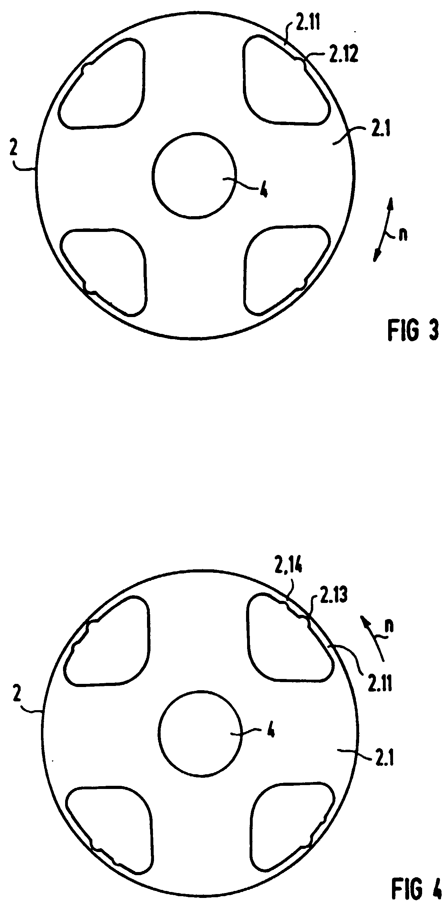

FIG 3,4 zeigen zwei Ausführungsbeispiele, bei denen zur erfindungsgemäßen Ausfüllung der Ausspannungen 5 umfangsrandseitig an die Polspitzen der Lamellen des Rotorblechpaketes 2 Lamellenstege 2.11 mitangestanzt sind. Zur Vermeidung von magnetischen Kurzschlüssen zwischen den benachbarten Rotorpolen 2.1 sind magnetische Engpässe in Form von Austanzungen 2.12 in FIG 3 bzw. 2.13, 2.14 gemäß FIG 4 vorgesehen; FIG 3 zeigt eine solche Engpaß-Anordnung mittig zwischen zwei benachbarten Rotorpolen 2.1 bei einem Motor, der in beiden Drehrichtungen n einsetzbar ist, und FIG 4 ein Rotorblechpaket 2 mit einem nur für eine Drehrichtung n vorgesehenen Motor, bei dem die magnetische Engstellen 2.13,2.14 in Drehrichtung n außermittig versetzt sind.

## Patentansprüche

1. Reluktanzmotor, insbesondere zum Antrieb eines Waschautomaten, mit über den Umfang eines wicklungslosen Rotors unter Bildung von Aussparungen (5) mit erhöhter Reluktanz verteilten Einzel-Rotorpolen (2.1) geringerer Reluktanz, wobei die Aussparungen (5) zumindest rotorumfangsseitig mit einer Ausfüllung (2.11;3) mit im Sinne einer eine Geräuschbildung durch Turbulenzen verhindernden glatten Umfangsoberfläche versehen sind, **dadurch gekennzeichnet**, daß die Ausfüllung (2.11;3) eine im Sinne einer bei betriebsmäßig relativ zum Stator (1) drehendem Rotor eine Geräuschbildung durch Magnetostriktion bzw. Momentenpulsation verhindernde magnetische Leitfähigkeit aufweist.

2. Reluktanzmotor nach Anspruch 1, **gekennzeichnet durch** zumindest einen magnetischen Engpaß (2.12;2.13,2.14;3.2) zwischen den jeweils in Umfangsrichtung benachbarten, durch eine Ausfüllung (2.11;3) verbundenen Rotorpolen.

3. Reluktanzmotor nach Anspruch 2, **gekennzeichnet durch** einen Engpaß (2.12;3.2) in Umfangsrichtung mittig zwischen zwei benachbarten Rotorpolen (2.1). (FIG. 2,3)

4. Reluktanzmotor nach Anspruch 2, **gekennzeichnet durch** eine in Umfangsrichtung außermittig in Drehrichtung n verlagerten Enpaß (2.13;2.14). (FIG. 4)

5. Reluktanzmotor nach einem der Ansprüche 1 bis 4, **gekennzeichnet durch** eine Kunststoff-Ausfüllung mit einer Beimischung aus magnetisch leitendem Material. (FIG. 2)

6. Reluktanzmotor nach Anspruch 5, **gekennzeichnet durch** eine blockartig zusammengesetzte Ausfüllung (3) mit einerseits ferromagnetfreien Kunststoff-Blöcken (3.2) und mit andererseits ferromagnetischen Blöcken (3.1). (FIG.2)

7. Reluktanzmotor nach Anspruch 6, **gekennzeichnet durch** ferromagnetische Blöcke (3.1) in Form von Kunststoffblöcken mit einer Bemischung von ferromagnetischem, vorzugsweise kornförmigen Magnetmaterial. (FIG.2)

8. Reluktanzmotor nach zumindest einem der Ansprüche 1-7, **gekennzeichnet durch** eine formschlüssige Verankerung (Krallen 2.15) der Ausfüllungen (3.1) mit den benachbarten Polen (2). (FIG.2)

9. Reluktanzmotor nach einem der Ansprüche 1 bis 6, **gekennzeichnet durch** einstückige Rotorblechpaket-Lamellen mit Ausfüllungen zwischen den Polenden der Rotorpole (2.1) in Form von einstückig angestanzten außenrandseitigen Lamellenstegen (2.11) und in die Lamellenstege (2.11) im Sinne eines magnetischen Engpasses eingestanzte Lücken (2.21;2.13,2.14). (FIG.3,4)

## Claims

1. Reluctance motor, in particular for driving an automatic washing machine, having individual rotor poles (2.1) of relatively low reluctance which are distributed around the circumference of a rotor without any windings, forming cutouts (5) of increased reluctance, the cutouts (5) being provided, at least on the rotor circumference side, with a filling (2.11;3) with a smooth circumferential surface for the purpose of preventing noise being produced by turbulence, characterized in that the filling (2.11;3) has a magnetic permeability for the purpose of preventing noise being produced by magnetostriction or torque pulsation when the rotor is rotating relative to the stator (1) in operation.

2. Reluctance motor according to Claim 1, characterized by at least one magnetic constriction (2.12;2.13,2.14;3.2) between those rotor poles which are in each case adjacent in the circumferential direction and are connected by a filling (2.11;3).

3. Reluctance motor according to Claim 2, characterized by a constriction (2.12;3.2) in the circumferential direction, centrally between two adjacent rotor poles (2.1). (Figs. 2, 3)

4. Reluctance motor according to Claim 2, characterized by a constriction (2.13;2.14) which is offset eccentrically in the circumferential direction in the rotation direction n. (Fig. 4)

5. Reluctance motor according to one of Claims 1 to 4, characterized by a plastic filling having an additive composed of magnetically permeable material. (Fig. 2)

6. Reluctance motor according to Claim 5, characterized by a filling (3) which is of block-like composition, has plastic blocks (3.2) on one side which are free of ferromagnetism and has ferromagnetic blocks (3.1) on the other side. (Fig. 2)

7. Reluctance motor according to Claim 6, characterized by ferromagnetic blocks (3.1) in the form of plastic blocks having an additive composed of ferromagnetic, preferably granular magnetic material. (Fig. 2)

8. Reluctance motor according to at least one of Claims 1 - 7, characterized by positively locking anchorage (claws 2.15) of the fillings (3.1) with the adjacent poles (2). (Fig. 2)

9. Reluctance motor according to one of Claims 1 to 6, characterized by integral rotor laminated core laminates having fillings between the pole ends of the rotor poles (2.1) in the form of integrally stamped laminate webs (2.11) at the outer edge, and gaps (2.21;2.13,2.14) which are stamped into the laminate webs (2.11) for the purpose of producing a magnetic constriction. (Figs. 3, 4)

## Revendications

1. Moteur à reluctance, destiné notamment à entraîner une machine à laver automatique, comportant des pôles de rotor individuels (2.1) de faible reluctance, répartis sur la périphérie d'un rotor sans bobinage, en formant des évidements (5) de reluctance plus élevée, ces évidements (5) étant munis au moins sur la périphérie du rotor d'un garnissage (2.11 ; 3) présentant une surface périphérique lisse empêchant la formation de bruits dus aux turbulences, caractérisé par le fait que lorsque le rotor est en rotation par rapport au stator (1) le garnissage (2.11 ; 3) a une conductivité magnétique empêchant la formation de bruits causés par magnétostriction et par pulsation des moments.

2. Moteur à reluctance selon la revendication 1, caractérisé par au moins un goulot d'étranglement magnétique (2.12 ; 2.13, 2.14 ; 3.2) entre les pôles de rotor voisins dans le sens périphérique, reliés par un garnissage (2.11 ; 3).

3. Moteur à reluctance selon la revendication 2, caractérisé par un goulot d'étranglement (2.12 ; 3.2) dans le sens périphérique, au point médian situé entre deux pôles de rotor voisins (2.1). (Figures 2 et 3)

4. Moteur à reluctance selon la revendication 2, caractérisé par un goulot (2.13;2.14) d'étranglement prévu, dans la direction de la périphérie, en dehors du milieu, suivant le sens de rotation n.

5. Moteur à reluctance selon l'une des revendications 1 à 4, caractérisé par un garnissage constitué d'une matière plastique additionnée d'un matériau à conduction magnétique. (Figure 2)

6. Moteur à reluctance selon la revendication 5, caractérisé par un garnissage (3) composé de blocs, comportant d'une part des blocs en matière plastique non ferromagnétique (3.2) et d'autre part des blocs ferromagnétiques (3.1). (Figure 2)

7. Moteur à reluctance selon la revendication 6, caractérisé par des blocs (3.1) ferromagnétiques se présentant sous la forme de blocs en une matière plastique à laquelle a été ajouté un matériau ferromagnétique se présentant de préférence sous la forme de granulés. (Figure 2)

8. Moteur à reluctance selon au moins l'une des revendications 1 à 7, caractérisé par un ancrage (griffes 2.15) par complémentarité de formes des garnissages (3,1) avec les pôles (2) voisins. (Figure 2)

9. Moteur à reluctance selon l'une des revendications 1 à 6, caractérisé par des lamelles de paquets de tôles de rotor munies de garnissages entre les extrémités polaires des pôles de rotor (2.1) sous la forme de traverses de lamelles (2.11) formées par estampage en une seule pièce sur le bord extérieur, et des vides (2.21 ; 2.13, 2.14) ajourés dans les traverses de lamelles (2.11), en vue de former un goulot d'étranglement magnétique. (Figures 3 et 4)
